# EUROPEAN PATENT SPECIFICATION

(11) **EP 1 983 439 B1**
(45) Date of publication and mention of the grant of the patent: **24.04.2013**
(21) Application number: 08250855.7
(22) Date of filing: 13.03.2008
(51) Int. Cl.: G06F 9/38, G06F 12/08

(54) **Prefetching based on streaming hints**
Prefetching basierend auf Streaming-Hinweisen
Prélecture basée sur des algorithmes d'optimisation de flux

(30) Priority: 29.03.2007 US 693410
(43) Date of publication of application: 22.10.2008
(73) Proprietor: Intel Corporation, Santa Clara, CA 95052 (US)
(72) Inventor: James,Thomas H., Mather, CA 95655 (US); Grobman, Steven, El Dorado Hills, CA 95762 (US)
(74) Representative: Beresford, Keith Denis Lewis

(56) References cited:
- US-A1- 2002 010 838
- US-A1- 2007 055 824

## Description

### Background

### Technical Field

The present disclosure relates generally to information processing systems and more specifically, to efficient NVM caching of application software.

### Background Art

Capabilities are emerging to reduce hard disk drive I/O latency and bandwidth bottlenecks. One capability is to use more responsive NVM (non-volatile memory) storage, such as flash memory technologies, which don't suffer from mechanical delays of drive head seek and travel times. Such NVM mechanisms may facilitate faster application execution than magnetic disc drives. As used herein, the terms "NVM" and "non-volatile" are intended to encompass faster, more responsive types of non-volatile memory storage, such as flash memory, that have faster performance times than magnetic disk storage.

Also, caching algorithms may be used to define what files are stored (sometimes referred to as "pinning") in NVM memory, such as flash memory. Current solutions allow for tracking of specific usage patterns on files and attempting to keep commonly used files in NVM memory for faster access and application load times. The files pinned in NVM memory then provide better performance than only using a HDD, CPU and system memory. This adds an additional layer to the caching architecture in addition to traditional CPU and System memory caches.

A separate set of emerging software technologies is evolving around application streaming or "Software as a Service (SaaS)". As used herein, SaaS refers to the ability to run an application from the local disk that has been streamed to the client from a central location. The application can either be cached (remain on the client) so that the user does not have to wait for the application to reload off the network the next time the application is executed or the application can be removed from the system automatically once the user finishes. One of the key objectives of streamed applications is to stream them in such a manner that the client can start executing the application before the full application has been streamed. To do this the SaaS application identifies how the executable and data files are to be loaded and sends them to the client in an optimized manner. Additionally, clients participating in SaaS often cache the streamed application data such that it is not necessary to re-send data on subsequent runs if the content has not changed. That is, each time the user desires to run the application, the SaaS application can check to see if there is a new version of the application. If so, the user may download either the completely new version, or just the differences. Otherwise, the user can run a previously-stored copy of the application.

U32002/10838 discloses a processor capable of executing prefetching instructions containing hint fields. The hint fields contain a first portion which enables the selection of a destination indicator for refill operations, and a second portion which identifiers a destination.

Aspects of the invention are defined by the claims appended hereto.

### Brief Description of the Drawings

Embodiments of the present invention may be understood with reference to the following drawings in which like elements are indicated by like numbers. These drawings are not intended to be limiting but arc instead provided to illustrate selected embodiments of systems, methods and mechanisms to utilize hints for the efficient client-side caching of application software.
Fig. 1 is a data and control flow diagram illustrating at least one embodiment of a method for utilizing hints in order to optimize storage of streamed application components in a non-volatile store on the client.
Fig. 2 is a flowchart illustrating two different specific alternative embodiments of the general method 100 illustrated in Fig. 1.
Fig. 3 is a block diagram of a multiprocessor system in accordance with an embodiment of the present invention that includes multi-drop bus communication pathways.
Fig. 4 is a block diagram of a multiprocessor system in accordance with an embodiment of the present invention that includes point-to-point interconnects.

### Detailed Description

The following discussion describes selected embodiments of methods, systems and mechanisms to utilize hints in order to optimize storage of streamed application components in a non-volatile store on the client. The apparatus, system and method embodiments described herein may be utilized with single-core, many-core, or multi-core systems. In the following description, numerous specific details such as system configurations, particular order of operations for method processing, and specific alternative embodiments of generalized method processing have been set forth to provide a more thorough understanding of embodiments of the present invention. It will be appreciated, however, by one skilled in the art that the invention may be practiced without such specific details. Additionally, some well-known structures, circuits, and the like have not been shown in dctail to avoid unnecessarily obscuring the present invention.

Presented herein are embodiments of methods and systems to optimize the storage of streamed application components in a non-volatile storage cache. The embodiments may provide performance improvements over current techniques, such as pinning recently-used or frequently-used files. Specifically, the embodiments perform pre-fetching of streamed application components (including, e.g., executable (DLL/EXE) and data files) into the non-volatile store in an optimized manner.

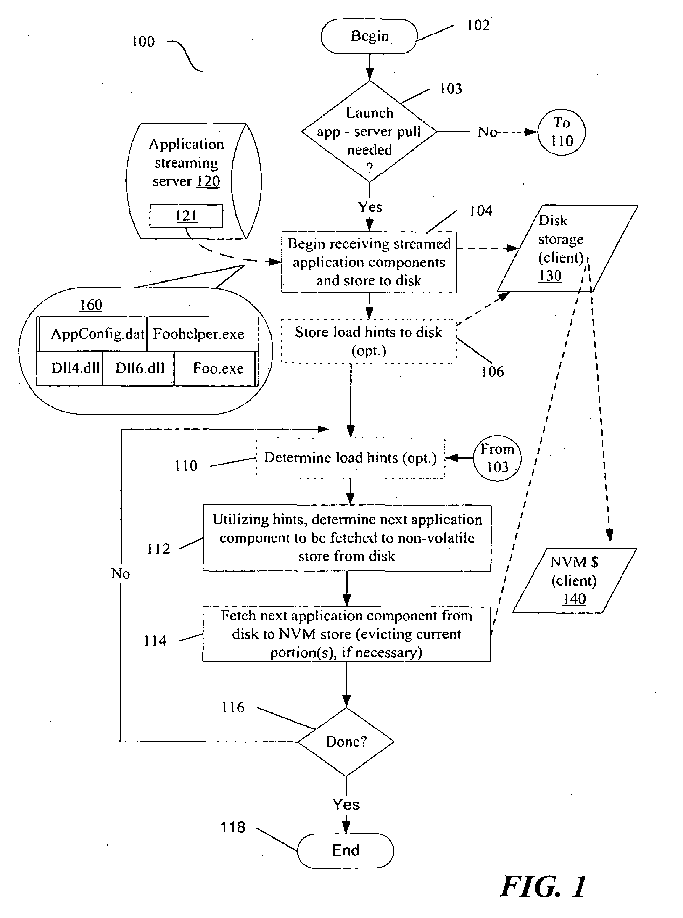

Traditional application streaming methods typically do not focus on efficient storage of the application on the client side. Some application vendors do work on ways to stream the application efficiently, and may run the application while collecting profile data in order to determine the most efficient manner to stream the data so that the application can be run on the client side before the entire download is complete. The profile data may be used to determine the order in which application components are streamed to a client -- to determine which pieces to download first. The order determination, which may be based on profile data, may be performed by packager logic (see, e.g., 121 of Fig. 1).

Accordingly, the software vendor may attempt to optimize the stream. If an early-needed application component is not placed until late in the package, the application on the client side typically must stall until the needed component gets there. To try to avoid this stalling, the packager orders the pieces for streaming, into a "package."

Fig. 1 is a data and control flow diagram illustrating at least one embodiment of a method 100 for utilizing streaming hints in order to optimize storage of streamed application components in a non-volatile store on the client. The streamed application components that are stored in the client's non-volatile store according to the method 100 may be retrieved from a slower storage medium of the client, such as a magnetic disk.
The method 100 thus utilizes streaming hints to optimize pre-fetching into a non-volatile cache from a slower storage medium.

Generally, the method 100 fills the NVM cache with application components (executable, dynamic-link library, data, etc) that are determined to have the highest probability of being requested next by the client during execution of the application. After the high-probability data has been requested into a lower-level cache, then it may be evicted from the non-volatile cache and a next-highest probability component may be pre-fetched in.

Fig. 1 illustrates that the method 100 begins at block 102 and proceeds to block 103. At block 103, the application is launched in response to user action. When the application is launched at block 103, it is determined whether one or more application components should be streamed to the client disk storage 130 from the server 120. If so, processing proceeds to block 104. Otherwise, processing proceeds to block 110.

At the time of launch, it is possible that the application has been previously executed by the client, such that at least some of the components of the application previously have been streamed to the client and have been stored to disk 130. If no server pull is necessary (e.g., all necessary components have already been previously streamed to the client disk storage 130), processing proceeds from block 103 to block 110.

In other cases, the application has not been previously steamed to the client; a server pull is therefore necessary. For such cases, Fig. 1 illustrates that processing proceeds from block 103 to block 104.

For cases where the application has been previously streamed, it may nonetheless be desirable to re-stream at least some of the application components from the server to the client. The latter case may include, for instance, situations where the client does not have the latest version of modified application components. In such cases, processing proceeds from block 103 to block 110.

At block 104, the client begins to receive one or more streamed application components from the streaming server 120. For purposes of illustration, a sample set of streamed application components 160 are illustrated. However, such illustration 160 should not in any way be taken to be limiting in terms of the number, kinds, or order of application components that may be streamed to the client at block 104.

For at least one embodiment, the components 160 of the application are streamed to the client at block 104 in an optimized manner. Accordingly, the application components are streamed to the client, and are received by the client at block 104, in a manner that permits the application to begin execution on the client before streaming of all of the application components has been completed. At block 104, the received application components are saved to disk storage 130 by the client.

From block 104, processing may optionally proceed to block 106 (discussed in further detail below). For other embodiments, block 106 is skipped, and processing instead may optionally proceed to block 110 (discussed in further detail below). For other embodiments, block 110 is skipped, and processing instead proceeds to block 112.

Regarding optional blocks 106 and 110, it should be understood that the hints that are utilized by the method 100 in order to drive the order of prefetching of application components from the disk 130 into the non-volatile store 140 may be determined in various manners. The embodiments discussed herein provide that the load hints may be determined either by the streaming side, the client side, or both. That is, a particular system may perform 106, 110, or both.

For those embodiments that utilize hints provided by the streaming entity (see, e.g., block 106), client-derived hint generation 110 is optional. The optional nature of client-derived hint generation 110 is denoted with broken lines in Fig. 1.

Similarly, for those embodiments that utilize client-generated hints (see, e.g., block 110), the use of hints provided by the streaming entity is optional. The optional nature of using hints that are provided by the streaming entity 106 is denoted with broken lines in Fig. 1.

Regarding block 106, load hints may be derived from the packager logic 121 of the streaming entity 120. Ordinarily, once the application is transferred and stored locally, all of the knowledge that was used to optimize the network stream is discarded. However, Fig. 1 illustrates that embodiments of the method 100, in addition to storing the streamed application components to disk at block 104, optionally may also store the load order or profile to disk 130 at block 106.

For at least one embodiment, the hint that is stored at block 106 may be a simplistic order of the items in the package. That is, the hints may simply be the load order itself. For at least one embodiment, the load order is determined by the streaming application packager logic (which may base its load order determination in profile data derived by the streaming entity). The packager logic 121 may provide to the client a load sequence map, also referred to as a "manifest" that indicates optimized load ordering.

This manifest may be stored to disk 130, along with the streamed application components, at block 106. As is explained in further detail below, the stored manifest may be consulted at block 112 in order to determine the next application component to be pre-fetched into the non-volatile store. In this manner, load hints are derived from the streaming application packager logic at block 106 and are utilized to inform the order of prefetching at block 112.

For at least one other embodiment, the hint (otherwise called a profile) could also include a probability, based on the profile data, of how likely it is that the module will be called in the near future. A significant portion of the complexity of an effectively streamed application is to package the application in an optimized manner such that the network stream closely resembles the sequence of load dependencies. Accordingly, the profile data or other indication of load order probabilities may be stored at block 106.

It will be understood by one of skill in the art that order of the blocks of operation illustrated in Fig. 1 is provided for illustrative purposes only and should not be taken to be limiting. For example, alternative embodiments of the method 100 may store the load hints (106) before beginning to store the streamed application components to disk (104).

For at least one other embodiment, load hints may be derived at block 110 by the client instead of being provided by the streaming entity. For example, the application itself may use a system that allows a software vendor to define a pinning prioritization hierarchy for the files utilized in executing their application. Such embodiment allows that, if an application knows that a file (or other arbitrary chuck of data) will be needed soon, it can directly provide a hint, at block 112, to indicate that the file should be transferred from magnetic disk to non-volatile storage. An example of this may be in a multi-level game where the game instructs the next level to be preloaded from disk to flash while the current level is being played out of RAM. When the current level completes, load times may be greatly improved via this pre-fetching scheme, even though the user may have never previously have played the level.

Prefetch hints generated by the application itself may provide a significant performance advantage over traditional prefetching schemes. For instance, if an infrequently-used application is executed by the client, the application-provided hints may ensure that the corresponding files that are associated with it are pre-fetched into the non-volatile cache. The infrequently-executed application can therefore benefit, in terms of speedy execution, from the non-volatile caching (whereas, typically only commonly-executed or recently-executed files would benefit from the non-volatile storage cache acceleration).

For at least one other embodiment, hints are derived at block 110 by the client using local profiling and detection of load patterns based on local execution of the application. For such embodiment, a software capability tracks the load patterns of the application and builds an associated "load map" as the application is run. Such load map may be stored in a memory storage location of the client (see, e.g., disk storage 130).

Thereafter, the stored load map may then be utilized at block 112, to permanently store high priority files from the load map in NV store or during subsequent execution of the application, to determine the order that files are moved into the NV store 140 from disk 130.

It should be noted that, while profiling is being performed, and the profile data is being collected, at block 110, the profile-based load hints may not yet be determined. For such instances, it may be desirable to utilize the manifest load order for pre-fetching hints during profiling, if client-side profile-based hints have not yet been generated. In this manner, prefetching into the non-volatile store 140 may be optimized even on the first profiling run.

Alternatively, rather than creating profile data as the application is executed on the client side, client-derived load hints may be determined during streaming instead. That is, a manifest of the load order may be created on the client side as the application is streamed.

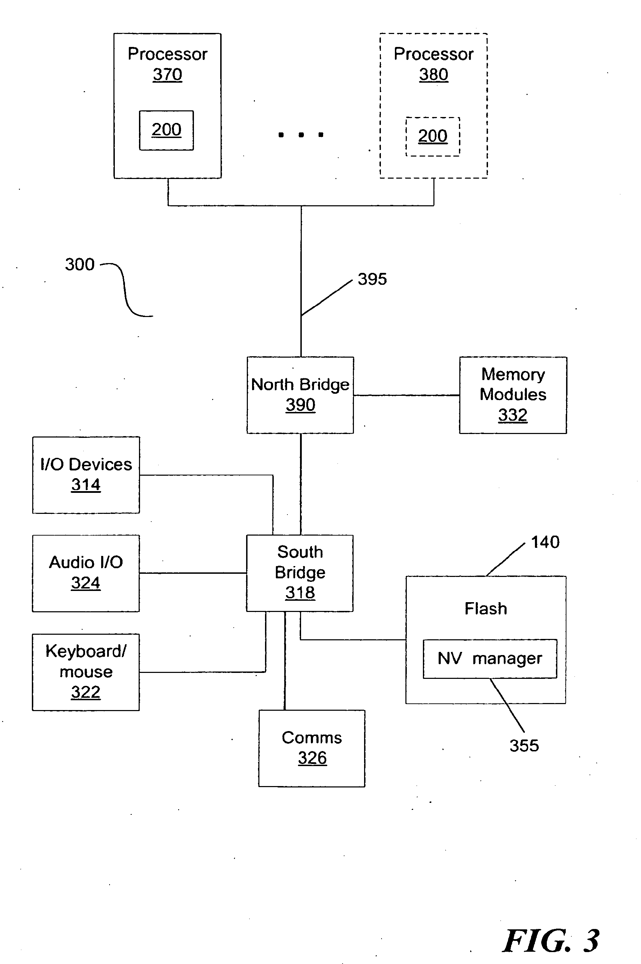

For each of the alternative embodiments discussed above, the load hints utilized at block 112 may be generated by different means (server-provided manifest, application-provided hints, client-generated profile, or any combination thereof). For any of these embodiments, the hint information may be provided to prefetch control logic for the non-volatile cache (referred to herein as an "NV prefetch manager"; see, e.g., 355 of Fig. 3).

It should be noted that, for at least one embodiment, the processing of block 112 may include additional processing after determining which application component should be the next to be pre-fetched. For one embodiment, for example, it is determined at block 112 whether this "next" components already resides in the NV storage cache 140. If so, the processing of block 112 may decline to pass a prefetch hint for such application component to the NV prefetch manager.

The NV prefetch manager may utilize the hints at block 114 to optimize pre-fetching of the disk-cached application into the faster non-volatile storage cache 140. At block 114, the next application component, or part thereof, is fetched into the non-volatile store 140. If necessary, a portion of the current contents of the non-volatile store 140 may be evicted by the NV prefetch manager in order to make room for the newly-fetched contents.

At block 116, it is determined whether the application has completed execution. If not, processing proceeds back to block 110 (opt.) or 112. If, on the other hand, the application has completed execution, processing ends at block 118.

In sum, Fig. 1 illustrates a method 100 that utilizes hints regarding the order of load execution in order to determine the next application component to be prefetched into a non-volatile storage, such as a flash cache (see, e.g., 140). The order of load execution can be derived through any one or more of a variety of means (streaming manifest, direct input and guidance from the application itself, and/or client-side monitoring and/or profiling). In this manner, an advantage is provided over current techniques, which often do not pre-fetch files that may be used infrequently, even when there may be a significant chance that the file is needed when a specific application is executed. The result is an end-user experience where an NV-cached streamed application may load and execute faster than a standard local application.

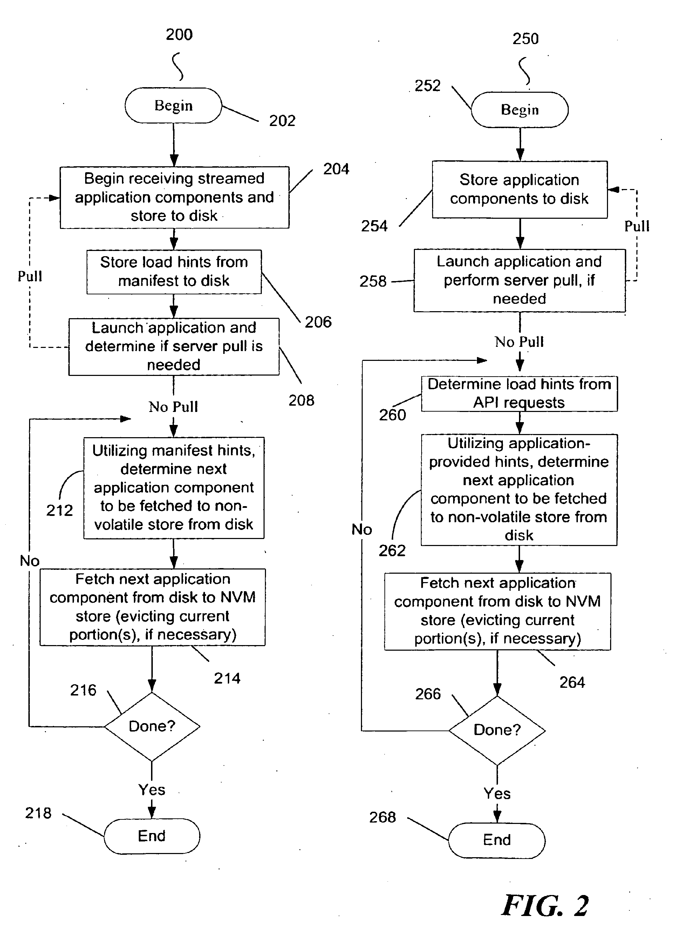

Fig. 2 is a flowchart illustrating two different specific alternative embodiments 200, 250 of the general method 100 illustrated in Fig. 1. Embodiment 200 is a method that utilizes a server-provided manifest to derive hints for the order of application components to be prefetched into a non-volatile store. Embodiment 250 is a method that utilizes application-provided API requests to dynamically derive hints, during application processing, for the order of application components to be prefetched into a non-volatile store.

For at least one embodiment, the method 250 shown in Fig. 2 may be implemented as an alternative embodiment of Fig. 1, where the application components are not necessarily streamed from a server. That is, for at least one embodiment of method 250, the streaming operation shown in block 104 of Fig. 1 is not performed, and the streaming server 120 is not present in the system. For such alternative embodiment, as is discussed below, the application components may be installed traditionally onto the system, without streaming.

Such specific embodiments are provided in Fig. 2 for purposes of further illustration. However, for the sake of brevity, only two specific embodiments 200, 250 are illustrated, arbitrarily chosen from among the numerous alternative embodiments of the method 100 illustrated in Fig. 1. Other embodiments, which are not specifically illustrated in Fig. 2, are nonetheless encompassed by the appended claims and by the processing of the method 100 illustrated in Fig. 1. Accordingly, although certain specific embodiments, such as a method 100 that utilizes client-side profiling to generate load order hints and also such as various hybrid approaches, are not explicitly illustrated in Fig. 2, such fact should not be taken to be limiting in any way on the scope of the appended claims.

Fig. 2 illustrates that method 200 begins at block 202 and proceeds to block 204. Processing of block 204 is along the lines of the processing of block 104 of Fig. l, discussed above. Generally, the application components are streamed to the client, and are received by the client at block 204. At block 204, the received application components are saved to disk storage (see, e.g., 130 of Fig. 1) by the client.

Processing proceeds from block 204 to block 206. At block 206, the load order manifest is also stored to disk. Processing then proceeds to block 208,. At block 208 the application is launched and a check is made to determine whether any new or modified application components should be pulled from the server. If so, processing proceeds back to block 204 (addition or modified components are received, and updated manifest may be received at block 206). Otherwise, processing then proceeds to block 212.

At block 212, the manifest hints for the streamed application are utilized by the NV prefetch manager (see, e.g., 355 of Fig. 3) to determine the next application component (or part thereof) to be fetched to the non-volatile store from disk. Such content is fetched into the non-volatile store at block 214. As is discussed above in connection with block 114 of Fig. 1, such fetching 114 may require that some of the current contents of the non-volatile store be evicted.

At block 216, it is determined whether the application has completed execution. If not, processing proceeds back to block 212. If, on the other hand, the application has completed execution, processing ends at block 218.

Fig. 2 illustrates that method 250 begins at block 252 and proceeds to block 254. At block 254, the application components are stored to disk (see, e.g., 130 of Fig. 1) by the client. The application components may have been received via streaming, or they may be loaded traditionally to the client. Regardless of how the components have been introduced to the client, the received application components are saved to disk storage (see, e.g., 130 of Fig. 1) by the client at block 254.

Processing proceeds from block 254 to block 258. Block 258 proceeds along the lines of block 208 (discussed above in connection with Fig. 2). Generally, at block 258 the application is launched and a server pull is performed, if necessary, to receive additional or updated application components. Processing then proceeds to block 260.

At block 260, application-provided API requests are made during application execution in order to provide load order hints to the NV prefetch manager (see, e.g., 355 of Fig. 3). Such hints are utilized by the NV prefetch manager (see, e.g., 355 of Fig. 3) at block 262 in order to determine the next application component (or part thereof) to be fetched to the non-volatile store from disk.

Such content is fetched into the non-volatile store at block 264. As is discussed above in connection with block 114 of Fig. 1, such fetching 264 may require that some of the current contents of the non-volatile store be evicted.

At block 266, it is determined whether the application has completed execution. If not, processing proceeds back to block 260. If, on the other hand, the application has completed execution, processing ends at block 268.

Fig. 3 is a block diagram of a first embodiment of a system 300 capable of performing disclosed techniques. The system 300 may include one or more processors 370, 380, which are coupled to a north bridge 390. The optional nature of additional processors 380 is denoted in Fig. 3 with broken lines.

The north bridge 390 may be a chipset, or a portion of a chipset. The north bridge 390 may communicate with the processor(s) 370, 380 and control interaction between the processor(s) 370, 380 and memory 332. The north bridge 390 may also control interaction between the processor(s) 370, 380 and Accelerated Graphics Port (AGP) activities. For at least one embodiment, the north bridge 390 communicates with the processor(s) 370, 380 via a multi-drop bus, such as a frontside bus (FSB) 395.

Fig. 3 illustrates that the north bridge 390 may be coupled to another chipset, or portion of a chipset, referred to as a south bridge 318. For at least one embodiment, the south bridge 318 handles the input/output (I/O) functions of the system 300, controlling interaction with input/output components. Various devices may be coupled to the south bridge 318, including, for example, a keyboard and/or mouse 322, communication devices 326, and an audio I/O as well as other I/O devices 314.

Fig. 3 illustrates that non-volatile memory 140 may be coupled to the south bridge 318. The non-volatile memory 140 may include, for at least one embodiment, an NV prefetch manager 355. For at least one embodiment, the NV prefetch manager 355 may be a combination of the hardware component (355) shown in Fig. 3, but may also include a software component (not shown). Alternatively, the NV prefetch manager 355 may be implemented as an all-hardware or as an all-software component, or may alternatively be implemented in firmware. Regardless of specific implementation, the NV manger 355 may perform processing along the lines of that discussed above in connection with blocks 112 and 144 of Fig. 1 and with blocks 212, 214, 262, and 264 of Fig. 2.

The non-volatile memory 140 may any type of non-volatile memory, including NOR flash and NAND flash. For at least one alternative embodiment, the non-volatile memory may be coupled directly to one or more processors 370, 380, rather than being coupled to the south bridge.

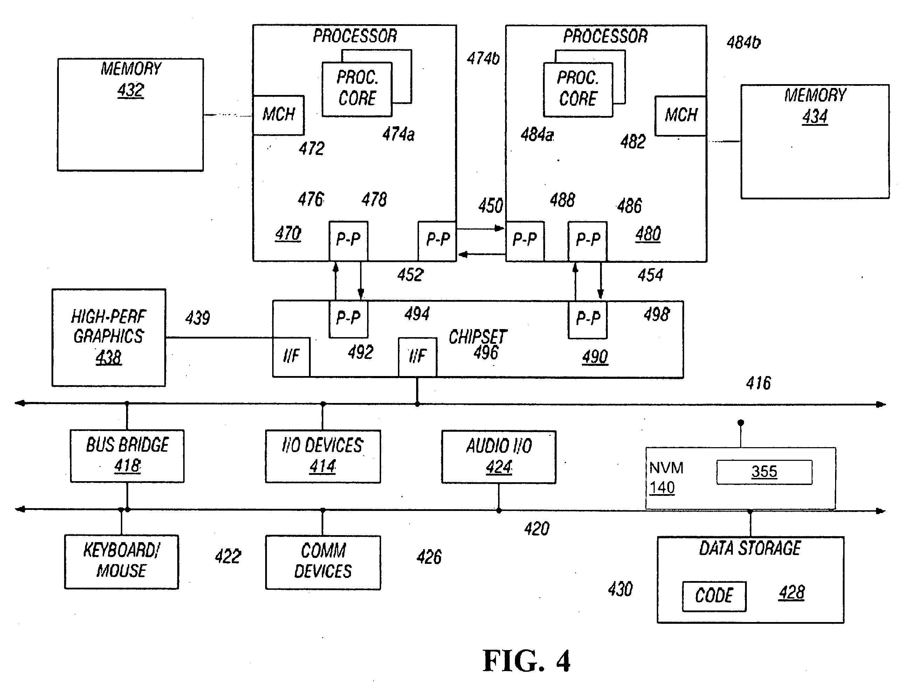

Embodiments may be implemented in many different system types. Referring now to Fig. 4, shown is a block diagram of a multiprocessor system in accordance with an embodiment of the present invention. As shown in Fig. 4, the multiprocessor system is a point-to-point interconnect system, and includes a first processor 470 and a second processor 480 coupled via a point-to-point interconnect 450. As shown in Fig. 4, each of processors 470 and 480 may be multicore processors, including first and second processor cores (i.e., processor cores 474a and 474b and processor cores 484a and 484b). While not shown for ease of illustration, first processor 470 and second processor 480 (and more specifically the cores therein) may include patch prevention logic in accordance with an embodiment of the present invention (see 200 of Fig. 2).

Rather having a north bridge and south bridge as shown above in connection with Fig. 3, the system 400 shown in Fig. 4 may instead have a hub architecture. The hub architecture may include an integrated memory controller hub Memory Controller Hub (MCH) 472, 482 integrated into each processor 470, 480. A chipset 490 (also sometimes referred to as an Interface Controller Hub, "IHC") may provide control of Graphics and AGP.

Thus, the first processor 470 further includes a memory controller hub (MCH) 472 and point-to-point (P-P) interfaces 476 and 478. Similarly, second processor 480 includes a MCH 482 and P-P interfaces 486 and 488. As shown in Fig. 4, MCH's 472 and 482 couple the processors to respective memories, namely a memory 432 and a memory 434, which may be portions of main memory locally attached to the respective processors.

While shown in Fig. 4 as being integrated into the processors 470, 480, the memory controller hubs 472, 482 need not necessarily be so integrated. For at least one alternative embodiment, the logic of the MCH's 472 and 482 may be external to the processors 470, 480, respectively. For such embodiment one or more memory controllers, embodying the logic of the MCH's 472 and 482, may be coupled between the processors 470, 480 and the memories 432, 434, respectively. For such embodiment, for example, the memory controller(s) may be stand-alone logic, or may be incorporated into the chipset 490.

First processor 470 and second processor 480 may be coupled to the chipset, or ICH, 490 via P-P interconnects 452 and 454, respectively. As shown in Fig. 4, chipset 490 includes P-P interfaces 494 and 498. Furthermore, chipset 490 includes an interface 492 to couple chipset 490 with a high performance graphics engine 438. For at least one embodiment, an Advanced Graphics Port (AGP) bus 439 may be used to couple graphics engine 438 to chipset 490. AGP bus 439 may conform to the Accelerated Graphics Port Interface Specification, Revision 2.0, published May 4, 1998, by Intel Corporation, Santa Clara, California. Alternately, a point-to-point interconnect 439 may couple these components.

In turn, chipset 490 may be coupled to a first bus 416 via an interface 496. For at least one embodiment, first bus 416 may be a Peripheral Component Interconnect (PCI) bus, as defined by the PCI Local Bus Specification, Production Version, Revision 2.1, dated June 1995. Alternatively, first bus 416 may be a bus such as the PCI Express bus or another third generation input/output (I/O) interconnect bus, although the scope of the present invention is not so limited.

As shown in Fig. 4, various I/O devices 414 may be coupled to first bus 416, along with a non-volatile cache 140, such as a flash memory. The non-volatile cache 140 may include a NV prefetch manager 355 to determine the order of prefetching for application information, as discussed above with reference to Figs. 1 and 2.

A bus bridge 418 may couple first bus 416 to a second bus 420. For at least one embodiment, second bus 420 may be a low pin count (LPC) bus.

Various devices may be coupled to second bus 420 including, for example, a keyboard/mouse 422, communication devices 426 and a data storage unit 428 which may include code 430, in one embodiment. Further, an audio I/O 424 may be coupled to second bus 420. Note that other architectures are possible. For example, instead of the point-to-point architecture of Fig. 4, a system may implement a multi-drop bus or another such architecture.

Embodiments of the mechanisms disclosed herein may be implemented in hardware, software, firmware, or a combination of such implementation approaches. Embodiments of the invention may be implemented as computer programs executing on programmable systems comprising at least one processor, a data storage system (including volatile and non-volatile memory and/or storage elements), at least one input device, and at least one output device.

Program code may be applied to input data to perform the functions described herein and generate output information. Accordingly, alternative embodiments of the invention also include machine-accessible media containing instructions for performing the operations of the invention or containing design data, such as HDL, which defines structures, circuits, apparatuses, processors and/or system features described herein. Such embodiments may also be referred to as program products.

Such machine-accessible storage media may include, without limitation, tangible arrangements of particles manufactured or formed by a machine or device, including storage media such as hard disks, any other type of disk including floppy disks, optical disks, compact disk read-only memories (CD-ROMs), compact disk rewritable's (CD-RWs), and magneto-optical disks, semiconductor devices such as read-only memories (ROMs), random access memories (RAMs) such as dynamic random access memories (DRAMs), static random access memories (SRAMs), erasable programmable read-only memories (EPROMs), flash memories, electrically erasable programmable read-only memories (EEPROMs), magnetic or optical cards, or any other type of media suitable for storing electronic instructions.

The output information may be applied to one or more output devices, in known fashion. For purposes of this application, a processing system includes any system that has a processor, such as, for example; a digital signal processor (DSP), a microcontroller, an application specific integrated circuit (ASIC), or a microprocessor.

The programs may be implemented in a high level procedural or object oriented programming language to communicate with a processing system. The programs may also be implemented in assembly or machine language, if desired. In fact, the mechanisms described herein are not limited in scope to any particular programming language. In any case, the language may be a compiled or interpreted language

While particular embodiments of the present invention have been shown and described, it will be obvious to those skilled in the art that changes and modifications can be made without departing from the scope of the appended claims. For example, although not specifically illustrated in Fig. 2, at least one alternative embodiment of the method 100 illustrated in Fig. 1 may utilize client-side profiling to generate hints. For such embodiment, the initial run of the application, during which profile data is collected, may or may not utilize any load order hints. For at least one embodiment, for example, the initial run of the application may utilize server-provided manifest hints, and later runs may utilize client-generated hints based on profile data.

For at least one other alternative embodiment, any of the load order hints discussed above may used as a starting point (e.g., the load hints may come from either the server side or the client side). Thereafter, load order may be adjusted based on behavior tracked by the client side during runtime. Such embodiment raises an issue regarding how subsequent updates are handled.

A streamed application may remain on disk until there are new updates. If the new updates are of a nature that the software vendor does not think will change the probabilities very much (e.g., a minor tool or macro), the software vendor may not provide to the client an update to the application profile to reflect the update. If, on the other hand, if the update is to a commonly-executed main executable file of the application, the vendor may provide a profile update as well. This profile update may be inaccurate if the client has been modifying the original hints during run-time. In such case, the vendor-provided hint may inappropriately overwrite the client's specialized hints. Accordingly, for the alternative embodiment being discussed in this paragraph, a mechanism may be employed to prevent inappropriate server overwrites of client-enhanced profile data. One such mechanism is for the client to send its updated profile data for the revised application component to the server when an update is made, and the sever may adjust the profile information accordingly, taking the client-derived information into account.

Also, for example, alternative embodiments may employ other types of non-volatile memory other than the NAND and NOR flash memories described above.

Also, for example, a system employing the techniques set forth in the appended claims may include one or more processors (see, e.g., 470, 480 of Fig. 4) that include integrated graphics controllers. For such embodiments, the system may not include a stand-alone graphics controller 438 or, if such a controller is present in the system, its function may more limited than the graphics controller 438 shown in Fig. 4.

## Claims

1. A computer-implemented method comprising:
receiving, on a client computer system, at least one component of a streamed application from a server;
storing the at least one component in a magnetic disk (130) of the computer system;
launching execution of the application on the client computer system before completion of streaming of remaining application components;
utilizing hints to determine a next one of the application components to be prefetched into a non-volatile store (140) of the computer system; and
prefetching the next application component into the non-volatile store (140) from the magnetic disk;
wherein the hints are of one or more types from the set comprising: streaming load order hints generated by the server, and client generated hints based on run-time profile data generated by the client computer system.

2. The method of claim 1, further comprising:
evicting information from the non-volatile store (140) in order to make room for the next application component.

3. The method of claim 1, wherein:
the set further comprises: run-time hints provided by the application.

4. The method of claim 3, wherein:
the hints further comprise of at least two types from the set.

5. The method of claim 3, further comprising:
utilizing an API (application programming interface) to provide the run-time hints from the application to a prefetch manager (355).

6. The method of claim 1, further comprising:
receiving at least one streaming load order hint from said server; and
storing said streaming load order hint in said memory.

7. The method of claim 1, wherein utilizing hints to determine a next one of the application components to be prefetched into a non-volatile store (140) of the computer system further comprises:
determining that a particular one of the application components has a higher probability of being executed in the near future than other ones of the application components; and
assigning the particular one of the application components as the next application component to be prefetched into the non-volatile store (140).

8. The method of claim 7, further comprising:
evicting from the non-volatile store (140) an application component having a lower probability than the next application component.

9. The method of claim 1, wherein the non-volatile store (140) is a cache memory.

10. An article comprising:
a tangible storage medium having a plurality of machine accessible instructions adapted to perform all the steps of the method of any one of claims 1 to 9.

11. A client computer system, which is adapted to receive at least one component of a streamed application from a server, the system comprising:
a processor (370, 380, 470, 480);
a non-volatile memory (140) coupled to the processor (370, 380, 470, 480);
a DRAM memory coupled to the processor and to the non-volatile memory (140); and
an NV manager (355) to utilize hints to determine a next component of an application;
the NV manager (355) to evict from the non-volatile memory (140) an application component having a lower probability than the next application component; and
the NV manager (355) further to prefetch the next application component into the non-volatile memory (140) from the DRAM memory;
wherein the hints are of one or more types from the set comprising: streaming load order hints generated by the server, and client generated hints based on run-time profile data generated by the client computer system.

12. The system of claim 11, wherein:
the NV manager (355) is further to evict information from the non-volatile memory (140) in order to make room for the next component.

13. The system of claim 11, wherein the set of hints further comprises run-time hints provided by the application.

14. The system of claim 13 which includes an API (application programming interface) to provide the run-time hints from the application to a prefetch manager (355).

15. The system of claim 11, wherein:
the run-time profile data is based on load patterns of local execution of the application.

## Patentansprüche

1. Computerimplementiertes Verfahren, wobei:
mindestens eine Komponente einer gestreamten Anwendung von einem Server her auf einem Client-Computersystem empfangen wird;
die mindestens eine Komponente auf einer Magnetplatte (130) des Computersystems gespeichert wird;
die Ausführung der Anwendung auf dem Client-Computersystem gestartet wird, bevor ein Streamen von verbleibenden Anwendungskomponenten fertiggestellt ist;
Hinweise verwendet werden, um eine Nächste der Anwendungskomponenten zu bestimmen, die vorab in einen nichtflüchtigen Speicher (140) des Computersystems abzurufen ist; und
die nächste Anwendungskomponente vorab aus der Magnetplatte in den nichtflüchtigen Speicher (140) abgerufen wird;
wobei die Hinweise zu einem oder mehreren Typen aus der Gruppe gehören, die Streaming-Ladereihenfolgehinweise, die durch den Server erzeugt werden, und client-erzeugte Hinweise, die auf durch das Client-Computersystem erzeugten Laufzeitprofildaten basieren, umfasst.

2. Verfahren nach Anspruch 1, wobei ferner:
Informationen aus dem nichtflüchtigen Speicher (41) geräumt werden, um Platz für die nächste Anwendungskomponente zu schaffen.

3. Verfahren nach Anspruch 1, wobei:
die Gruppe ferner durch die Anwendung bereitgestellte Laufzeithinweise umfasst.

4. Verfahren nach Anspruch 3, wobei:
die Hinweise ferner solche von mindestens zwei der Typen aus der Gruppe umfassen.

5. Verfahren nach Anspruch 3, wobei ferner:
eine API (Anwendungsprogrammierschnittstelle) verwendet wird, um die Laufzeithinweise von der Anwendung einem Vorabrufverwalter (355) bereitzustellen.

6. Verfahren nach Anspruch 1, wobei ferner:
mindestens ein Streaming-Ladereihenfolgehinweis von dem Server her empfangen wird; und
der Streaming-Ladereihenfolgehinweis in dem Speicher gespeichert wird.

7. Verfahren nach Anspruch 1, wobei beim Verwenden von Hinweisen, um eine Nächste der vorab in einen nichtflüchtigen Speicher (140) des Computersystems abzurufenden Anwendungskomponenten zu bestimmen, ferner:
bestimmt wird, dass eine Bestimmte der Anwendungskomponenten eine höhere Wahrscheinlichkeit aufweist, in naher Zukunft ausgeführt zu werden, als Andere der Anwendungskomponenten; und
die Bestimmte der Anwendungskomponenten als die vorab in den nichtflüchtigen Speicher (140) abzurufende nächste Anwendungskomponente festgelegt wird.

8. Verfahren nach Anspruch 7, wobei ferner:
aus dem nichtflüchtigen Speicher (140) eine Anwendungskomponente geräumt wird, die eine niedrigere Wahrscheinlichkeit als die nächste Anwendungskomponente aufweist.

9. Verfahren nach Anspruch 1, wobei der nichtflüchtige Speicher (140) ein Cache-Speicher ist.

10. Gegenstand, umfassend:
ein greifbares Speichermedium mit mehreren maschinenzugänglichen Anweisungen, die dazu ausgelegt sind, all die Schritte des Verfahrens nach einem der Ansprüche 1 bis 9 durchzuführen.

11. Client-Computersystem, das dazu ausgelegt ist, mindestens eine Komponente einer gestreamten Anwendung von einem Server her zu empfangen, wobei das System umfasst:
einen Prozessor (370, 380, 470, 480);
einen nichtflüchtigen Speicher (140), der mit dem Prozessor (370, 380, 470, 480) gekoppelt ist;
einen DRAM-Speicher, der mit dem Prozessor und dem nichtflüchtigen Speicher (140) gekoppelt ist; und
einen NV-Verwalter (355), um Hinweise zum Bestimmen einer nächsten Komponente einer Anwendung zu verwenden;
wobei der NV-Verwalter (355) aus dem nichtflüchtigen Speicher (140) eine Anwendungskomponente räumt, die eine niedrigere Wahrscheinlichkeit als die nächste Anwendungskomponente aufweist; und
wobei der NV-Verwalter (355) ferner die nächste Anwendungskomponente vorab aus dem DRAM-Speicher in den nichtflüchtigen Speicher (140) abruft;
wobei die Hinweise zu einem oder mehreren Typen aus der Gruppe gehören, die Streaming-Ladereihenfolgehinweise, die durch den Server erzeugt werden, und client-erzeugte Hinweise, die auf durch das Client-Computersystem erzeugten Laufzeitprofildaten basieren, umfasst.

12. System nach Anspruch 11, wobei:
der NV-Verwalter (355) ferner dazu dient, Informationen aus dem nichtflüchtigen Speicher (140) zu räumen, um Platz für die nächste Komponente zu schaffen.

13. System nach Anspruch 11, wobei die Gruppe von Hinweisen ferner Laufzeithinweise umfasst, die durch die Anwendung bereitgestellt werden.

14. System nach Anspruch 13, das eine API (Anwendungsprogrammierschnittstelle) enthält, um die Laufzeithinweise von der Anwendung einem Vorabrufverwalter (355) bereitzustellen.

15. System nach Anspruch 11, wobei:
die Laufzeitprofildaten auf Lademustern einer lokalen Ausführung der Anwendung basieren.

## Revendications

1. Procédé mis en oeuvre par ordinateur, comprenant le fait :
de recevoir, sur un système informatique client, au moins une composante d'une application continue à partir d'un serveur ;
de stocker l'au moins une composante dans un disque magnétique (130) du système informatique ;
de lancer l'exécution de l'application sur le système informatique client avant l'achèvement d'une transmission en continu des composantes d'application restantes ;
d'utiliser des algorithmes d'optimisation pour déterminer la composante d'application suivante qui doit être prélue dans une mémoire non volatile (140) du système informatique ; et
de prélire la composante d'application suivante dans la mémoire non volatile (140) à partir du disque magnétique ;
dans lequel les algorithmes d'optimisation sont d'un ou de plusieurs types parmi l'ensemble comprenant : des algorithmes d'optimisation d'ordre de chargement en continu générés par le serveur, et des algorithmes d'optimisation générés par le client, basés sur des données de profil de temps d'exécution générées par le système informatique client.

2. Procédé de la revendication 1, comprenant en outre le fait :
de retirer les informations à partir de la mémoire non volatile (140) pour laisser place à la composante d'application suivante.

3. Procédé selon la revendication 1, dans lequel :
l'ensemble comprend en outre : des algorithmes d'optimisation de temps d'exécution fournis par l'application.

4. Procédé selon la revendication 3, dans lequel :
les algorithmes d'optimisation comprennent en outre au moins deux types de l'ensemble.

5. Procédé selon la revendication 3, comprenant en outre le fait :
d'utiliser une API (interface de programmation d'applications) pour fournir les algorithmes d'optimisation de temps d'exécution depuis l'application vers un gestionnaire de pré-lecture (355).

6. Procédé selon la revendication 1, comprenant en outre le fait :
de recevoir au moins un algorithme d'optimisation d'ordre de chargement en continu à partir dudit serveur ; et
de stocker ledit algorithme d'optimisation d'ordre de chargement en continu, dans ladite mémoire.

7. Procédé de la revendication 1, dans lequel l'utilisation des algorithmes d'optimisation pour déterminer la composante suivante des composantes d'application qui doit être prélue dans une mémoire non volatile (140) du système informatique comprend en outre le fait :
de déterminer qu'une composante particulière des composantes d'application a une plus grande probabilité d'être exécutée prochainement que les autres composantes d'application ; et
de considérer la composante particulière des composantes d'application comme la composante d'application suivante à prélire dans la mémoire non-volatile (140).

8. Procédé selon la revendication 7, comprenant en outre le fait :
de retirer à partir de la mémoire non volatile (140) une composante d'application ayant une probabilité plus faible que la composante d'application suivante.

9. Procédé selon la revendication 1, dans lequel la mémoire non volatile (140) est une mémoire cache.

10. Article comprenant :
un support de stockage tangible ayant une pluralité d'instructions accessibles par machine adaptées pour exécuter toutes les étapes du procédé selon l'une quelconque des revendications 1 à 9.

11. Système informatique client, qui est adapté pour recevoir au moins une composante d'une application continue à partir d'un serveur, le système comprenant :
un processeur (370, 380, 470, 480) ;
une mémoire non volatile (140) couplée au processeur (370, 380, 470, 480) ;
une mémoire DRAM couplée au processeur et à la mémoire non volatile (140) ; et
un gestionnaire NV (355) pour utiliser des algorithmes d'optimisation afin de déterminer une composante suivante d'une application ;
le gestionnaire NV (355) pour retirer à partir de la mémoire non volatile (140) une composante d'application ayant une probabilité plus faible que la composante d'application suivante ; et
le gestionnaire NV (355) en outre destiné à prélire la composante d'application suivante dans la mémoire non volatile (140) à partir de la mémoire DRAM ;
dans lequel les algorithmes d'optimisation sont d'un ou de plusieurs types de l'ensemble comprenant : des algorithmes d'optimisation d'ordre de chargement en continu générés par le serveur, et des algorithmes d'optimisation générés par le client basés sur des données de profil de temps d'exécution générées par le système informatique client.

12. Système selon la revendication 11, dans lequel :
le gestionnaire NV (355) est en outre destiné pour retirer des informations de la mémoire non volatile (140) afin de laisser place à la composante suivante.

13. Système selon la revendication 11, dans lequel l'ensemble d'algorithmes d'optimisation comprend en outre des algorithmes d'optimisation de temps d'exécution fournis par l'application.

14. Système selon la revendication 13 qui comprend une API (interface de programmation d'applications) destinée à fournir les algorithmes d'optimisation de temps d'exécution depuis l'application vers un gestionnaire de pré-lecture (355).

15. Système selon la revendication 11, dans lequel :
les données de profil de temps d'exécution sont basées sur des modèles de chargement de l'exécution locale de l'application.
